# FASCICULE DE BREVET EUROPEEN

(11) **EP 1 423 437 B1**
(45) Date de publication et mention de la délivrance du brevet: **11.03.2009**
(21) Numéro de dépôt: 02772505.0
(22) Date de dépôt: 14.08.2002
(51) Int. Cl.: C08F 2/38

(54) **PROCEDE DE POLYMERISATION RADICALAIRE REALISE EN PRESENCE DE COMPOSES DISULFURES**
VERFAHREN ZUR RADIKAL-POLYMERISATION IN GEGENWART VON DISULFIDE VERBINDUNGEN
RADICAL POLYMERISATION METHOD PERFORMED IN THE PRESENCE OF DISULPHIDE COMPOUNDS

(30) Priorité: 28.08.2001 FR 0111187
(43) Date de publication de la demande: 02.06.2004
(73) Titulaire: RHODIA CHIMIE, 92510 Boulogne-Billancourt (FR)
(72) Inventeur: CATALA, Jean-Marie, F-67450 Mundolsheim (FR)
(74) Mandataire: Bernasconi, Jean Raymond
(86) Numéro de dépôt international: PCT/FR2002/002884
(87) Numéro de publication internationale: WO 2003/020773

(56) Documents cités:
- EP-A- 0 592 283
- WO-A-98/01478
- FR-A- 2 773 161
- US-A- 3 862 975

## Description

La présente invention a trait à un procédé de polymérisation radicalaire de monomères éthyléniquement insaturés, et en particulier de monomères méthacryliques, donnant accès à des compositions de polymères à extrémités de chaînes réactivables, utilisables en particulier pour la préparation de copolymères séquencés.

Dans la présente description, et en l'absence d'indications contraires, le terme "polymère" sera utilisé pour désigner, au sens large, aussi bien des homopolymères que des copolymères.

Par ailleurs, au sens de l'invention on entend par "copolymère séquencé" (ou "copolymère à blocs") un copolymère comprenant au moins deux enchaînements (blocs) successifs d'unités monomères de constitutions chimiques différentes. Chacun des blocs présents peut être constitué d'un homopolymère ou d'un copolymère obtenu à partir d'un mélange de monomères éthyléniquement insaturés. Dans le second cas, le bloc peut notamment être un copolymère statistique. Les copolymères à blocs au sens de l'invention peuvent ainsi comprendre deux blocs constitués, chacun, de copolymères statistiques. Dans ce cas, les monomères éthyléniquement insaturés sont tels que les blocs obtenus sont de natures différentes. Par "blocs de natures différentes", on entend soit des blocs constitués de monomères de types différents, soit des blocs constitués de monomères de même type mais dans des quantités différentes.

De tels copolymères séquencés sont habituellement préparés par polymérisation ionique. Toutefois, ce mode de préparation présente l'inconvénient de ne permettre que la polymérisation d'un nombre limité de monomères, de type apolaire, tels que le styrène ou le butadiène. De plus, la polymérisation ionique requiert généralement des contraintes de mise en oeuvre sévères, et notamment un milieu réactionnel particulièrement exempt d'impuretés et des températures de mises en oeuvre souvent inférieures à l'ambiante, de manière à minimiser l'apparition de réactions parasites.

De telles contraintes n'existent pas dans le cas de la polymérisation radicalaire, qui présente en outre l'avantage de pouvoir être mise en oeuvre dans le cadre de la polymérisation d'autres types de monomères. De ce fait, on s'est rapidement intéressé à la polymérisation radicalaire dans le cadre de la préparation de copolymères séquencés.

Cependant, lors, d'une réaction de polymérisation radicalaire conventionnelle, les macroradicaux en croissance ont généralement une réactivité non-sélective et les chaînes se terminent de façon irréversible par couplage ou dismutation. Par conséquent, en polymérisation radicalaire, il est généralement très difficile de contrôler la structure des chaînes réalisées et il est en particulier extrêmement difficile de réaliser des polymères fonctionnalisés en bout de chaîne, ce qui limite, dans le cas le plus général, les possibilités d'obtenir des copolymères séquencés par polymérisation radicalaire,

De façon à surmonter ce type de difficulté, on a récemment développé des procédés de polymérisation radicalaire particuliers, dans lesquels les chaînes polymères réalisées sont fonctionnalisées par des groupements terminaux susceptibles de pouvoir être réactivés sous forme de radicaux libres grâce à des réactions de terminaisons ou de transferts réversibles.

Ce type de polymérisation radicalaire spécifique est généralement désigné par le terme de polymérisation radicalaire "contrôlée" ou "vivante". Ces dénominations proviennent du fait que la présence des groupements terminaux réactivables décrits ci-dessus induit l'existence d'équilibres entre des espèces fonctionnalisées (dites espèces "dormantes") et des espèces actives (radicaux libres), ce qui permet à la fois de maîtriser la croissance des chaînes polymères (obtention de distributions des masses resserrées et contrôle de la masse moléculaire moyenne, notamment en jouant sur le rapport molaire monomère /précurseur de chaînes actives) et d'obtenir des polymères fonctionnalisés, dits "vivants", c'est à dire capables d'être mis en oeuvre à titre d'espèces réactivables dans des réactions de polymérisations radicalaires subséquentes, ce qui s'avère particulièrement intéressant dans le cadre de la préparation de copolymères séquencés. Pour plus de détails à ce sujet, on pourra notamment se référer à K. Matyjaszewski, Ed. Controlled Radical Polymerization, ACS Symposium Series 685, American Chemical Society Washington, DC, 1998.

Dans ce cadre, on a en particulier développé de multiples procédés de polymérisations contrôlées (vivantes), dits "par transfert réversible de chaînes", mettant en oeuvre des mécanismes d'addition-fragmentation. Cette synthèse particulière de polymère est réalisée en effectuant une polymérisation radicalaire en présence d'agents de transfert réversible et d'une source de radicaux libres, généralement amorcée thermiquement, ce qui conduit à l'obtention de polymères fonctionnalisés. Ce type de polymérisation est une des technologies les plus appropriées pour synthétiser des copolymères à blocs par voie radicalaire. Pour plus de détails concernant de telles polymérisations, on pourra se reporter par exemple aux demandes de brevets WO 98/01478, au nom de Dupont de Nemours, et WO 99/35178, au nom de Rhodia Chimie, qui décrivent l'utilisation d'agents de transfert réversible de type dithioesters de type RS(C=S)R' pour la synthèse de copolymères à architecture contrôlée, ou encore aux demandes de brevets WO 99/35177 au nom de Rhodia Chimie et WO 99/31144 au nom de Dupont de Nemours qui ont trait au contrôle de polymérisations radicalaires par des agents de transfert dithiocarbamates de type RS(C=S)NR'R". On pourra également se reporter aux demandes de brevets WO 98/58974, WO 00/75207 ou WO 01/42312, au nom de Rhodia Chimie qui décrivent l'utilisation de xanthates de formule générale RSC(=S)OR', qui constituent, dans le cas le plus général, des agents de transferts réversibles particulièrement intéressants.

D'autres voies d'accès ont été développées pour réaliser des compositions de polymères vivants de type polyméthacrylates fonctionnalisés en bout de chaînes, utilisables pour synthétiser des copolymères séquencés. Dans ce cadre, on peut par exemple citer les procédés de polymérisations vivantes photoinitiées mettant en oeuvre des agents particuliers dits "photoiniferters". Ces photoiniferters sont des composés qui, sous activation photochimique (typiquement sous rayonnement UV), sont à la fois capables d'amorcer la réaction de polymérisation, de jouer le rôle d'agents de transfert réversible et d'agents de terminaison. Les disulfures de xanthate de type RO(C=S)S-S(C=S)OR, tels que ceux décrits par Niwa et al. dans J. Macromol. Sci. Chem., vol A24, p. 567 (1987), constituent un exemple typique d'agents photoiniferters utilisables pour réaliser une polymérisation radicalaire contrôlée susceptible de mener à des compositions de polymères vivants. Toutefois, dans le cadre de la mise en oeuvre de tels composés, les polymères vivants obtenus sont spécifiquement constitués de chaînes polymères essentiellement fonctionnalisées à leurs deux extrémités. La mise en oeuvre de ces chaînes vivantes à titre d'espèces réactivables dans la préparation de copolymères séquencés mène de ce fait généralement à l'obtention de copolymères séquencés symétriques de type (polymère 2)-(polymère 1)-(polymère 2), et, de façon générale, la préparation de copolymères séquencés non symétriques, de type (polymère 1)-(polymère 2), n'est pas rendue possible selon ce type de procédé.

Or, les inventeurs ont maintenant découvert que, de façon surprenante, des composés disulfurés du type des disulfures de xanthate, utiles à titre de composés photoiniferters dans des réactions de polymérisations vivantes photoinitiées évoquées ci-dessus, peuvent être mis en oeuvre à titre d'agents de transfert dans des réactions de polymérisation radicalaire, en association avec une source de radicaux libres amorcée thermiquement, pour réaliser des compositions de polymères vivants, utilisables notamment dans le cadre de la réalisation de polymères séquencés.

De façon particulièrement inattendue, les travaux des inventeurs ont permis de mettre en évidence que la mise en oeuvre de tels composés disulfurés dans une polymérisation radicalaire thermoinitiée mettant en oeuvre des monomères de type méthacrylate, permet de réaliser des compositions de polymères de type polyméthacrylates fonctionnalisés en bout de chaînes et possédant un caractère vivant effectif. Les travaux des inventeurs ont également permis de montrer que, dans ce cas comme dans le cas général, les polymères vivants obtenus sont généralement monofonctionnalisés, ce qui permet d'envisager leur mise en oeuvre dans la synthèse de copolymères séquencés de type (polyméthacrylate)-(polymère).

Sur la base de ces découvertes, un des buts de la présente invention est de fournir un procédé de polymérisation radicalaire de composés éthyléniquement insaturés, et en particulier de type esters méthacryliques, capable de se substituer, au moins dans certaines applications, aux procédés connus de l'état de la technique.

L'invention a également pour but de fournir des compositions à base de chaînes polymères, notamment de type polyméthacrylates, possédant un caractère vivant, c'est à dire réactivables sous la forme de radicaux libres susceptibles d'être mis en oeuvre dans des réactions de polymérisations ultérieures.

Un autre but de l'invention est de fournir un procédé de préparation de copolymères séquencés comprenant des blocs de type poly(méthacrylate), ces copolymères étant avantageusement des copolymères séquencés non symétriques.

Ainsi, la présente invention a pour objet un procédé de préparation d'un copolymère à blocs de deuxième génération comprenant une étape consistant à réaliser la polymérisation radicalaire d'un mélange comprenant :
- une source de radicaux libres,
- au moins un monomère éthyléniquement insaturé, et
- une composition polymère susceptible d'être obtenue selon un procédé comprenant, comprenant une étape de polymérisation radicalaire non photoinitiée mettant en oeuvre une composition comprenant :
   (a) au moins un monomère éthyléniquement insaturé ;
   (b) au moins un composé répondant à la formule (II) ci-dessous :

      Z¹-C(=S)--S-S-C(=S)-Z² formule (II),

      et
   (c) au moins une source de radicaux libres activable thermiquement, distincte du composé de formule (II),
      où, dans la formule (II) :
- Z¹ et Z² sont identiques ou différents, et représentent chacun un radical choisi parmi :
   (i) un groupement alkyle, halogénoalkyle, perfluoroalkyle, alcényle ou alcynyle, acyle, aryle, arylalkyle, arylalcényle, arylalcynyle, ou bien un cycle carboné ou un hétérocycle, ou bien encore une chaîne polymère;
   (ii) un radical -OR³, dans lequel R³ désigne un groupement choisi parmi;
      - un groupement alkyle, halogénoalkyle, perfluoroalkyle, alcényle, alcynyle, acyle, aryle, arylalkyle, arylalcényle, arylalcynyle, ou bien un cycle carboné ou un hétérocycle, ou bien une chaîne polymère ;
      - un groupement -CR^{A}R^{B}PO(OR^{C})(OR^{D}), dans lequel :
         - R^{A} et R^{B} représentent chacun, indépendamment l'un de l'autre, un atome d'hydrogène, un atome d'halogène, un groupement perfluoroalkyle, un cycle carboné ou un hétérocycle, ou bien encore un groupement -NO₂, -NCO,
         - CN, ou un groupement choisi parmi les groupements de type -R^{E}, -SO₃R^{E}, -OR^{E}, -SR^{E}, -NR^{E}R^{F}, -OOCR^{E},
         - CONR^{E}R^{F}, ou -SO₃R^{E}, dans lesquels les groupements représentés par R^{E} et R^{F} désignent chacun, de façon indépendante, un groupement alkyle, alcényle, alcynyle, aryle, aryle, arylalkyle, arylalcényle, ou arylalcynyle ;
         ou bien R^{A} et R^{B} forment ensemble un groupement =O
         ou =S ;
         ou bien R^{A} et R^{B} forment ensemble, avec l'atome de carbone auquel ils sont rattachés, un cycle hydrocarboné
         ou un hétérocycle ; et
         - R^{C} et R^{D} représentent chacun, indépendamment l'un de l'autre, un radical répondant à l'une des définitions données ci-dessus pour le groupement R^{E} ;
         ou bien R^{C} et R^{D} forment ensemble une chaîne hydrocarbonée comportant de 2 à 4 atome de carbone, éventuellement interrompue par un groupement -O-, -S-, ou
         - NR^{G}-, où R^{G} répond à l'une des définitions données ci-dessus pour le groupement R^{E} ;
         ou
   (iii) un groupement -NR⁴R⁵, où :
      - R⁴ et R⁵ représentent indépendamment l'un de l'autre un radical choisi parmi un groupement alkyle, halogénoalkyle, alcényle, alcynyle, acyle, ester, aryle, arylalkyle, arylalcényle, arylalcynyle, ou un cycle carboné; ou
      - R⁴ et R⁵ forment ensemble une chaîne hydrocarbonée comportant de 2 à 4 atome de carbone, éventuellement interrompue par un groupement -O-, -S-, ou -NR^{H}-, où R^{H} répond à l'une des définitions données ci-dessus pour le groupement R^{E}, ladite chaîne hydrocarbonée formant avantageusement un cycle à 5 chaînons avec l'azote auquel sont rattachés R⁴ et R⁵,
   les radicaux R⁴ et R⁵ induisant de préférence un effet électroattracteur ou un effet de délocalisation vis à vis de la densité électronique de l'atome d'azote auquel ils sont liés.

Selon un mode de réalisation avantageux du procédé de l'invention, le monomère éthyléniquement insaturé (a) mis en oeuvre répond à la formule (I) ci-dessous :

H₂C=CR¹R²

dans laquelle :
- R¹ représente un radical -COOA, dans lequel A désigne un groupement alkyle, halogénoalkyle, perfluoroalkyle, alcényle, alcynyle, arylalkyle, arylalcényle, ou arylalcynyle ; et
- R² représente un atome d'hydrogène, un atome d'halogène, un groupement alkyle, un groupement halogénoalkyle, ou un groupement alcoxy, ces groupements alkyle, halogénoalkyle ou alcoxy pouvant être substitués ou non.

Dans l'ensemble de la présente description, on entend couvrir par le terme de groupement "alkyle" un radical hydrocarboné saturé, linéaire ou ramifié, pouvant éventuellement inclure un ou plusieurs cycle(s) aliphatique(s) saturé(s). Au sens de l'invention, les groupes alkyles peuvent présenter jusqu'à 25 atomes de carbone, et ils contiennent de préférence de 1 à 12 atomes de carbone, et avantageusement de 1 à 6 atomes de carbone,

De façon particulière, un groupe alkyle peut également désigner, au sens de l'invention, un groupe cycloalkyle, c'est-à-dire un radical hydrocarboné saturé cyclique, présentant de préférence de 3 à 10 atomes de carbone.

Un groupement "alcoxy" désigne quant à lui, au sens de l'invention, un radical -OAlk, où Alk désigne un groupement alkyle tel que défini ci-dessus.

Par groupement "halogénoalkyle" au sens de l'invention, on entend un radical alkyle tel que défini précédemment et substitué par au moins un atome d'halogène, où le terme "atome d'halogène" désigne ici, comme dans l'ensemble de la description, un atome de fluor, de chlore, de brome ou d'iode, de préférence un atome de fluor ou de chlore, et avantageusement un atome de fluor. Les groupements "halogénoalkyle" de l'invention peuvent ainsi être par exemple des groupements "perfluoroalkyle", c'est à dire, au sens de l'invention, des groupements répondant à la formule -CH₂CₙF₂ₙ₊₁, où n représente un entier allant de 1 à 20.

Par ailleurs, un groupement "alcényle", au sens où il est employé dans la présente description, désigne un radical hydrocarboné insaturé, linéaire ou ramifié, présentant au moins une double liaison C=C. Les groupes alcényles de l'invention peuvent présenter jusqu'à 25 atomes de carbone et comprennent de préférence de 2 à 12 atomes de carbone, et avantageusement de 2 à 6 atomes de carbone.

De même, on entend par groupe "alcynyle" un radical hydrocarboné insaturé, linéaire ou ramifié et présentant au moins une triple liaison C≡C. Les groupes alcynyles de l'invention présentent généralement de 2 à 25 atomes de carbone, et ils comprennent de préférence de 2 à 15 atomes de carbone, et avantageusement de 2 à 6 atomes de carbone.

Un groupement "acyle" désigne quant à lui, au sens de l'invention, un groupement de formule -C(=O)-B, où B désigne une chaîne hydrocarbonée linéaire ou ramifiée, saturée ou insaturée, et comportant de 1 à 25 atomes de carbone, et qui peut notamment être un groupe alkyle, alcényle ou alcynyle tels que définis ci-dessus.

Par groupement "ester" au sens de l'invention, on entend un groupement -C(=O)-OB, où B désigne une chaîne hydrocarbonée linéaire ou ramifiée, saturée ou insaturée, et comportant de 1 à 25 atomes de carbone, et qui peut notamment être un groupe alkyle, alcényle ou alcynyle tels que définis ci-dessus.

Au sens de l'invention, un radical de type "cycle carboné" désigne un groupement cyclique saturé, insaturé ou aromatique, notamment de type cycloalkyle, cycloalcényle ou cycloalcynyle, éventuellement substitué, et comportant de 3 à 20 atomes de carbone. Un radical de type "hétérocycle" désigne quant à lui un tel cycle carboné interrompu par au moins un hétéroatome choisi par exemple parmi N, O ou S.

Un groupement "aryle" désigne quant à lui, au sens de l'invention, un groupe aromatique mono- ou polycyclique possédant généralement de 5 à 20 atomes de carbone, et de préférence de 6 à 10 atomes de carbone. Ainsi, il peut par exemple s'agir d'un groupe phényle, ou encore 1- ou 2- naphtyle. Selon une variante particulière un groupe "aryle" au sens de l'invention peut intégrer un ou plusieurs hétéroatomes tels que le soufre, l'oxygène, ou l'azote. Dans ce cas particulier, le groupe "aryle" au sens de l'invention désigne un groupement hétéroaromatique mono- ou polycyclique.

Les groupes "arylalkyles", "aralcényles" et "aralcynyles" au sens de l'invention sont respectivement des chaînes alkyles, alcényles et alcynyles substituées par un groupement aryle tel que défini ci-dessus. En d'autres termes, les groupes "arylalkyles", "aralcényles" et "aralcynyles" au sens de l'invention sont respectivement des groupements de type Ar-Ra-, dans lesquels Ar- représente un groupement aryle et où les groupes de type -Ra- représentent respectivement une chaîne alkylène, alcénylène, ou alcynylène.

Les différents radicaux présents dans les composés (I) et (II) peuvent éventuellement être interrompus par un ou plusieurs hétéroatomes choisis notamment parmi O, S, et N, Si, ou par des groupes -(C=O)-, -(C=S)-, -SO₂-, -SO-, ou amines secondaires ou tertiaires, et ils peuvent être substitués par tout type de groupements non susceptible d'interférer avec la réaction de polymérisation ou de mener à des réactions parasites entre les composés en présence, et notamment par un ou plusieurs groupements identiques ou différents choisis parmi un atome d'halogène, un groupement silylé, un groupement -OH, alcoxy, -SH, thioalcoxy, -NH₂, mono- ou di-alkylamino, -CN, -COOH, ester, amine, ou perfluoroalkyle, lesdits substituant pouvant éventuellement être interrompus par des hétéroatomes. Il est des compétences de l'homme du métier de choisir la nature des différents groupements et substituants présents dans les composés mis en oeuvre pour éviter toute réaction secondaire indésirable.

Les composés disulfurés de formule (II) spécifiquement mis en oeuvre dans le procédé de la présente invention sont des composés connus, dont certains ont été décrits notamment à titre d'accélérateurs de vulcanisation pour les pneumatiques ou comme composés de type agents iniferters. Ces composés sont généralement préparés selon un procédé connu de l'homme du métier, qui consiste à oxyder, généralement en présence d'iode, un ou plusieurs sels d'anions de type Z-(C=S)S⁻, où Z a l'une des significations données précédemment pour Z¹ et Z².

Les composés de formule (II) utilisés dans le procédé de l'invention sont généralement tels que les deux groupements Z¹ et Z² sont identiques. En effet, la synthèse de composés disulfurés de type symétrique est généralement plus facile à mettre en oeuvre que celle des composés asymétriques. Toutefois, le procédé de l'invention ne saurait se limiter à la mise en oeuvre de tels composés symétriques.

Selon un mode de réalisation particulièrement avantageux du procédé de l'invention, chacun des groupements Z¹ et Z² présents dans le composé de formule (II) mis en oeuvre est un radical de type -OR³ où R³ est un radical tel que défini précédemment. Ainsi, le composé de formule (II) mis en oeuvre selon la présente invention peut être de façon avantageuse un disulfure de xanthate répondant à la formule (IIa) suivante :

Z^{a}O-C(=S) -S-S-C(=S)-OZ^{b} formule (IIa),

dans laquelle les groupes Z^{a} et Z^{b}, identiques ou différents, désignent chacun un radical répondant à l'une des définitions données précédemment pour R³, et désignent de préférence des radicaux choisis parmi les radicaux alkyle, halogénoalkyle, aryle, ou arylalkyle. De façon particulièrement avantageuse, chacun des groupements Z^{a} et Z^{b} désigne un radical alkyle, halogénoalkyle, aryle, ou arylalkyle. Dans le cas où Z^{a} ou Z^{b} désigne un radical alkyle, celui-ci est préférentiellement choisi parmi les radicaux comportant de 2 à 4 atomes de carbone, de préférence parmi les radicaux éthyle ou isopropyle. A titre de substituants Z^{a} et Z^{b} particulièrement intéressants, on peut également citer le radical 2,2,2-trifluoroéthyle ou le radical phényle.

Ainsi, à titre de composés de formule (IIa) particulièrement avantageux dans le cadre de la mise en oeuvre de la présente invention on peut citer :
- le bis-éthoxythiocarbonyl-disulfane
   (EtO(C=S)S-S(C=S)OEt ; où Et désigne un groupement éthyle) ;
- le bis-phénoxythiocarbonyl-disulfane
   (PhO(C=S)S-S(C=S)OPh ; où Ph désigne un groupement phényle) ;
- le bis-[(2,2,2)trifluoroéthoxythiocarbonyl]-disulfane
   (F₃C-CH₂O(C=S)S-S(C=S)OCH₂-CF₃) ; ou
- le bis-isopropyloxythiocarbonyl-disulfane
   (iPrO(C=S)S-S(C=S)OiPr ; où iPr désigne un groupement isopropyle).

Selon un autre mode de réalisation du procédé de l'invention, chacun des groupements Z¹ et Z² présents dans le composé disulfuré de formule (II) est choisi parmi un groupement alkyle, un groupement halogénoalkyle, un groupement alcényle ou un groupement alcynyle. Dans ce cas, les groupements Z¹ et Z² sont le plus souvent identiques.

Selon encore un autre mode de réalisation du procédé de l'invention, chacun des groupements Z¹ et Z² présents dans le composé disulfuré de formule (II) est un groupement -NR⁴R⁵, où les radicaux R⁴ et R⁵ désignent chacun un groupement alkyle, halogénoalkyle, aryle, arylalkyle, acyle ou ester, ou bien où les radicaux R⁴ et R⁵ forment, avec l'azote auquel ils sont rattachés, un hétérocycle, de préférence à 5 chaînons, substitué ou non substitué. Des exemples de composés disulfurés particulièrement utiles selon ce mode particulier sont notamment les composés de formule (II) où Z¹ et Z² désignent chacun un groupement choisi parmi un groupement -NR⁴R⁵, où les radicaux R⁴ et R⁵ désignent chacun un groupement éthyle, phényle, ou COOCH₃.

De façon générale, le procédé de la présente invention peut être mis en oeuvre dans le cadre de la polymérisation de tout monomère éthyléniquement insaturé, et, tout particulièrement pour réaliser la polymérisation de monomères répondant à la formule (I) précitée. La nature exacte du polymère mis en oeuvre selon la présente invention peut naturellement varier en fonction de l'application finale particulière à laquelle est destiné le polymère que l'on souhaite obtenir. Ainsi, il est en particulier à noter que les monomères éthyléniquement insaturés mis en oeuvre selon le procédé de l'invention peuvent être utilisés seuls, ce par quoi on obtient une homopolymérisation, ou bien en mélange avec d'autres monomères, ce par quoi on réalise une copolymérisation statistique. Il est des compétences de l'homme du métier de sélectionner le ou les différents monomères à mettre en oeuvre pour obtenir un polymère tel que désiré.

Le procédé de l'invention se révèle particulièrement intéressant pour la polymérisation de monomères de type esters méthacryliques.

Ainsi, de façon particulièrement avantageuse le monomère de formule (I) mis en oeuvre dans le procédé de l'invention peut répondre à la formule (la) ci dessous :

H₂C=CR¹(CH₃) formule (la),

dans laquelle le radical R¹ est tel que défini précédemment, et désigne de façon préférentielle un groupement -COOA, où A désigne un groupement alkyle ou halogénoalkyle au sens de l'invention. Des exemples de monomères de formule (la) avantageusement utilisables selon l'invention sont par exemple le méthacrylate de méthyle, le méthacrylate d'éthyle, le méthacrylate de n-butyle, le méthacrylate de tert-butyle, le méthacrylate de 2-éthylhexyle, le méthacrylate de benzyle, le méthacrylate d'hydroxyéthyle, le méthacrylate d'hydroxypropyle , le méthacrylate de trifluoroéthyle, le méthacrylate de glycidyle, ou encore le méthacrylate de triméthoxysilylpropyle, ainsi que les mélanges de deux ou plusieurs de ces composés.

A ce sujet, il est donc à noter que le procédé de l'invention, de par la mise en oeuvre du composé de formule (II) et d'une source de radicaux libres amorcée thermiquement, permet de synthétiser des chaînes de type polyméthacrylates possédant un caractère vivant effectif.

Il faut bien souligner qu'une telle possibilité est particulièrement inattendue au vu des résultats généralement observés lors de la polymérisation de monomères de type esters méthacryliques selon les procédés connus de l'état de la technique.

En effet, en polymérisation radicalaire vivante, le caractère contrôlé de la croissance des chaînes est d'autant plus marqué que la vitesse de réactivation des chaînes sous forme de radicaux libres est grande par rapport à la vitesse de croissance des chaînes (propagation), ce qui est généralement le cas.

Or, dans le cadre spécifique de la mise en oeuvre de monomères de type méthacrylates (esters méthacryliques) en polymérisation radicalaire vivante mettant en oeuvre des agents de transfert réversible, il arrive souvent que la réaction de propagation des chaînes soit largement favorisée par rapport à la réaction de réactivation, sans doute du fait du caractère stabilisé important des radicaux libres de type méthacrylyles mis en oeuvre dans la réaction de polymérisation. Dans ce cas, on observe un contrôle extrêmement faible, voire inexistant, de la réaction de polymérisation, qui peut mener à une non-fonctionnalisation de la plupart des chaînes formées.

De façon à éviter ce problème, il et nécessaire d'adapter la nature de l'agent de transfert réversible mis en oeuvre. Cependant, à l'heure actuelle, cette adaptation s'effectue de façon empirique. Ainsi, on a par exemple observé que la mise en oeuvre d'un dithioester ou d'un dithiocarbamate semble généralement préférable à celle d'un xanthate, mais on ne connaît pas de façon exacte l'influence de la structure de l'agent de transfert réversible sur l'efficacité du contrôle obtenu pour une polymérisation de méthacrylates.

Il apparaît donc que la possibilité d'effectuer la synthèse de chaînes polyméthacrylates possédant un caractère vivant en mettant en oeuvre les composés de formule (II) est complètement inattendue. La possibilité d'effectuer une telle synthèse de chaînes polyméthacrylates fonctionnalisés en utilisant des composés de formule (IIa) (disulfures de xanthate) est quant à elle encore plus particulièrement surprenante, compte tenu de la grande similitude que présentent les composés de formule (IIa) avec les xanthates, qui ne permettent pas toujours d'obtenir un tel résultat.

En fonction de leurs natures respectives, le monomère de formule (I) et le composé disulfuré de formule (II) peuvent être mis en oeuvre en des quantités très variables dans la composition soumise à l'étape de polymérisation radicalaire du procédé de l'invention. Toutefois, on préfère généralement que, dans la composition soumise à la réaction de polymérisation, le ratio molaire de la quantité de composé (II) rapportée à la quantité de monomère (I) soit compris entre 1 : 5 et 1 : 10 000, et de préférence entre 1 : 20 et 1 : 500.

Quelle que soit la nature exacte des composés de formule (I) et (II) utilisés, le procédé est spécifiquement mis en oeuvre en présence d'une source de radicaux libres activable thermiquement, utilisée de façon à réaliser une polymérisation radicalaire non photoinitiée de la composition utilisée.

Par "polymérisation radicalaire non photoinitiée", on entend, au sens de la présente invention toute polymérisation réalisée en mettant en oeuvre une étape d'amorçage non photochimique. De ce fait, il est à souligner que le procédé de l'invention est en particulier à distinguer des procédés de polymérisation de l'état de la technique mettant en oeuvre un composé de formule (II) à titre d'agent iniferter, qui sont spécifiquement photoinitiées, c'est à dire dans lesquelles la formation des radicaux libres initiant la réaction de polymérisation radicalaire est liée à une réaction photochimique, généralement induite par un rayonnement de type rayonnement UV.

Avantageusement, le procédé de polymérisation radicalaire non photoinitiée de la présente invention met en oeuvre une étape d'amorçage thermique, qui consiste le plus souvent à porter la composition comprenant les monomères et la source de radicaux libres activable thermiquement à une température généralement de l'ordre de 0°C à 150°C, et le plus souvent entre 15°C et 120°C.

La source de radicaux libres activable thermiquement qui est utilisée dans le procédé pour obtenir la composition polymère susmentionnée est spécifiquement distincte du composé (II), même dans le cas où ce composé est susceptible de libérer des radicaux libres à la suite d'une activation thermique.

En règle générale, on préfère également que cette source de radicaux libres soit distincte des monomères éthyléniquement insaturés mis en oeuvre. Ainsi, la source de radicaux libres activable thermiquement qui est utilisée dans le procédé de l'invention est généralement choisie parmi les initiateurs classiquement employés en polymérisation radicalaire. Ainsi, il peut s'agir par exemple d'un initiateur choisi parmi :
- les peroxydes d'hydrogène tels que : l'hydroperoxyde de butyle tertiaire, l'hydroperoxyde de cumène, le t-butyl-peroxyacétate, le t-butylperoxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle, le persulfate de potassium, ou encore le persulfate d'ammonium ;
- les composés azoïques tels que : le 2-2'-azobis(isobutyronitrile), le 2,2'-azobis(2-butanenitrile), le 4,4'-azobis(4-acide pentanoïque), le 1,1'-azobis(cyclohexane-carbonitrile), le 2-(t-butylazo)-2-cyanopropane, le 2,2'-azobis[2-méthyl-N-(1,1)-bis(hydroxyméthyl)-2-hydroxyéthyl] propionamide, le 2,2'-azobis(2-méthyl-N-hydroxyéthyl]-propionamide, le dichlorure de 2,2'-azobis(N,N'-diméthylèneisobutyramidine), le dichlorure de 2,2'-azobis (2-amidinopropane), le 2,2'-azobis (N,N'-diméthylèneisobutyramide), le 2,2'-azobis(2-méthyl-N-[1,1-bis (hydroxyméthyl)-2-hydroxyéthyl] propionamide), le 2,2'-azobis(2-méthyl-N-[1,1-bis (hydroxyméthyl)éthyl] propionamide), le 2,2'-azobis[2-méthyl-N-(2-hydroxyéthyl) propionamide], ou bien encore le 2,2'-azobis(isobutyramide) dihydrate ; ou
- les systèmes redox comportant des combinaisons telles que, par exemple :
   - les mélanges de peroxyde d'hydrogène, d'alkyle, peresters, percarbonates et similaires et d'un composé choisi parmi un sel de fer, un sel de titane, le formaldéhyde sulfoxylate de zinc ou le formaldéhyde sulfoxylate de sodium, et des sucres réducteurs ;
   - les persulfates, perborates ou perchlorates de métaux alcalins ou d'ammonium, en association avec un bisulfite de métal alcalin, tel que le métabisulfite de sodium, et des sucres réducteurs;
   - les persulfate de métal alcalin en association avec un acide arylphosphinique, tel que l'acide benzène phosphonique et autres similaires, et des sucres réducteurs ; ou
   - un mélange de deux ou plusieurs de ces initiateurs.

Dans le cas de l'utilisation de tels initiateurs, la quantité d'initiateur utilisée dans le procédé de l'invention pour obtenir la composition polymère susmentionnée est généralement déterminée de manière à ce que la quantité de radicaux susceptible de pouvoir être générée thermiquement est d'au moins 100% en mole par rapport à la quantité de composé (II), et de préférence d'au moins 200% en mole.

Dans tous les cas de figure, la réaction de polymérisation radicalaire mise en oeuvre dans le procédé de la présente invention peut être réalisée en masse, en solution; en émulsion, en dispersion ou en suspension. De préférence, la polymérisation du procédé de l'invention est conduite en solution ou en émulsion.

Le composé disulfuré (II) mis en oeuvre est généralement présent dans le milieu de polymérisation dès le début de la réaction. Toutefois, il est à noter que ce composé peut aussi être ajouté au cours de la polymérisation.

La température à laquelle est conduit le procédé de la présente invention pour obtenir la composition polymère susmentionnée peut, de façon générale, varier entre 0°C et 150°C selon la nature des monomères utilisés. Lors de la mise en oeuvre spécifique de monomères répondant à la formule générale (I), cette température de mise en oeuvre est généralement comprise entre 15°C et 120°C, et elle est de préférence comprise entre 20°C et 100°C, en particulier dans le cas de la mise en oeuvre de monomères méthacrylique de formule (la).

De façon générale, sans vouloir être lié à une quelconque théorie concernant le mécanisme réactionnel exact mis en oeuvre dans la réaction de polymérisation de la présente invention, il peut être avancé que, les compositions mises en oeuvre dans le procédé de la présente invention, qui contiennent une source de radicaux libres activable thermiquement, un ou plusieurs monomère(s) éthyléniquement insaturé(s) de formule (I) et un composé disulfuré de formule (II), mènent, à l'issue de l'étape de polymérisation du procédé de l'invention, à l'obtention de compositions polymères comprenant des polymères vivants de première génération constitués de chaînes polymères possédant à l'une au moins de leur extrémité un groupement -S(C=S)-Z, où Z a l'une des significations données précédemment pour les groupements Z¹ et Z² de la formule (II). La présence de cette fonctionnalité de bout de chaîne peut par exemple être mise en évidence par spectrométrie de masse, notamment par une spectrométrie de type MALDI-TOF (Matrix-Assisted Laser Desorption Ionization-Time Of Flight) du type de celle mise en oeuvre dans les procédures d'analyses décrites dans Macromolecular Rapid Communication, volume 21, pp. 1035 et suivantes (2000).

Par ailleurs, lesdites compositions polymères obtenues selon le procédé de l'invention comprennent spécifiquement des chaînes comportant à l'une de leur extrémité un groupement caractéristique de l'amorçage thermique réalisé lors du procédé de l'invention, qui dépend de la nature exacte de la source de radicaux libres mise en oeuvre dans le procédé de l'invention. Là encore, la présence de cette fonction en bout de chaîne peut être mise en évidence par une spectrométrie de masse de type MALDI-TOF.

De façon plus spécifique, les compositions polymères susmentionnées renferment généralement des chaînes polymères vivantes répondant à la formule (P) ci-dessous :

Z-(C=S) -S-[-CR¹R²-CH₂-]ₙ-Y formule (P),

dans laquelle :
- le radical Z a l'une quelconque des significations données précédemment pour les groupements Z¹ et Z² présents dans les composés de formule (II) ;
- les groupements R¹ et R², qui peuvent avoir des significations différentes au sein de chaque unité [-CR¹R²-CH₂-] de la formule P, représentent, au sein de chaque unité [-CR¹R²-CH₂-], deux groupements identiques ou différents répondant chacun à l'une des définitions données précédemment lors de la définition des composés de formule (1) du procédé de l'invention ;
- n désigne un entier au moins égal à 1, généralement inférieur ou égal à 1000, de préférence inférieur ou égal à 500.
- Y désigne un radical caractéristique de l'amorçage thermique réalisé lors de la polymérisation du procédé de l'invention,

Le radical Y présent dans la formule (P) désigne spécifiquement un résidu dont la structure est celle d'un radical libre susceptible d'être engendré par la source de radicaux libres activable thermiquement mise en oeuvre selon le procédé de l'invention. Par ailleurs, il est à noter qu'au sens où il est utilisé dans la formule (P), le radical Y est spécifiquement différent d'un radical de type Z-(C=S) -S- où z a l'une quelconque des significations données précédemment pour les groupements Z¹ et Z² présents dans les composés de formule (II). Ce radical est également différent d'un radical de type CN₂-Gr¹r²-, dans lequel les groupements r¹ et r² répondent chacun à l'une des définitions données précédemment pour R¹ et R² dans les composés de formule (I) du procédé de l'inventon.

Ainsi, dans la formule (P), le radical Y peut par exemple représenter un radical de type fragment de peroxyde, fragment de composé azoïque, fragment de percarbonate, fragment de perester, fragment de persulfate, fragment de perborates ou fragment de perchlorate, Dans le cadre de la mise en oeuvre d'AIBN (2-2'-azobis(isobutyronitrile)) à titre de source de radicaux libres activée thermiquement, le radical Y désigne généralement un groupement cyanoisopropyle.

Il est à noter que la présence spécifique de chaînes de formule (P) ainsi définies au sein des compositions polymères susmentionnées permet en particulier de distinguer les compositions obtenues selon l'invention des compositions polymères obtenues par les procédés de polymérisation radicalaire de l'état de la technique, notamment celles qui mettent en oeuvre un composé de formule (II) à titre d'agent photoiniferter, et au sein desquelles aucune chaîne obtenue ne possède un groupement du type du groupement Y caractéristique de l'amorçage thermique réalisé selon l'invention, La présence de ces chaînes peut notamment être mise en évidence par spectrométrie de masse, et en particulier par une spectrométrie de type MALDI-TOF telle que définie précédemment.

Dans le cadre particulier de la mise en oeuvre d'un monomère méthacrylique de formule (la), les compositions polymères obtenues renferment généralement des chaînes polymères vivantes répondant à la formule (P1) ci-dessous :

Z-(C=S)-S-[-CR¹(CH₃)-CH₂-]ₙ-Y formule (P1),

dans laquelle Z, R¹, n et Y ont les définitions précitées.

De même, dans le cadre particulier de la mise en oeuvre d'un disulfure de xanthate de formule (IIa) à titre de composé disulfuré et d'un monomère méthacrylique de formule (la), les compositions polymères obtenues renferment généralement des chaînes polymères vivantes répondant à la formule (P2) ci-dessous :

Z'O-(C=S) -S-[-CR¹R²-CH₂-]ₙ-Y formule (P2),

dans laquelle Z' a l'une des significations données pour Z^{a} et Z^{b} dans la formule générale (IIa), et où R¹, R², n et Y ont les définitions précitées.

De façon préférentielle une proportion importante des chaînes polymères présentes au sein des compositions polymères obtenues à l'issue du procédé de l'invention répondent à la formule générale (P) définie ci dessus, Avantageusement, une proportion importante de ces chaînes répond à l'une des formules générales (P1) ou (P2). Ainsi, on préfère que, dans la composition polymère obtenue, au moins 40%, avantageusement au moins 60%, et de façon particulièrement préférentielle au moins 80% des chaînes polymères présentes répondent à la définition de la formule générale (P), et par exemple à l'une des définitions (P1) ou (P2) telles que définies précédemment. La proportion de ces chaînes au sein de la composition peut notamment être déterminée par une séparation des différents constituants du mélange, notamment par chromatographie en phase liquide, suivie d'une analyse quantitative de ces constituants, par exemple par spectrométrie UV ou au moyen d'un détecteur de type détecteur UV.

Selon un mode particulièrement avantageux de réalisation de l'invention, on préfère que la composition obtenue à l'issue du procédé de l'invention soit constituée pour l'essentiel de chaînes répondant à la définition (P) précitée, c'est à dire qu'au moins 90% des chaînes qu'elle contient, et de préférence au moins 95% de ces chaînes, répondent à ladite formule (P). Dans ce cadre, l'essentiel des chaînes présentes peut notamment répondre à la définition de la formule générale (P1) ou bien encore à celle de la formule générale (P2).

De ce fait, les compositions polymères susmentionnées peuvent avantageusement être mises en oeuvre à titre de compositions polymères réactivables dans un procédé de copolymérisation du type de celui décrit par exemple dans les demandes de brevets WO 98/01478, WO 98/58974, WO 99/31144, WO 99/35177, ou WO 99/35178, en particulier pour préparer des copolymères séquencés.

La mise en oeuvre de compositions comprenant des chaînes polymères répondant à la formule (P1), et, de façon plus générale, l'utilisation de compositions obtenues par mise en oeuvre de monomères méthacryliques dans le procédé de l'invention peut ainsi mener à la préparation de copolymères séquences intégrant des blocs de type poly(méthacrylates).

Ainsi, la présente invention concerne l'utilisation des compositions polymères susmentionnées à titre de compositions polymères vivantes (réactivables) dans un procédé de préparation de polymères séquencés mettant en oeuvre la polymérisation radicalaire d'un mélange comprenant ladite composition réactivable et au moins un monomère éthyléniquement insaturé constitue un autre objet particulier de la présente invention.

Dans ce cadre, les compositions réactivables obtenues selon le procédé de la présente invention peuvent notamment être mises en oeuvre dans un procédé de préparation d'un copolymère à bloc de deuxième génération comprenant une étape consistant à réaliser la polymérisation radicalaire d'un mélange comprenant :
- une source de radicaux libres,
- au moins un monomère éthyléniquement insaturé, et
- une composition polymère réactivable, obtenue selon le procédé susmentionnées.

L'étape de polymérisation radicalaire mise en oeuvre dans le procédé de préparation de copolymères à bloc de deuxième génération de l'invention est généralement une étape de polymérisation radicalaire de type contrôlée, c'est à dire dans laquelle un contrôle de la croissance des chaînes peut être réalisée. Ainsi, dans cette étape de polymérisation mettant en oeuvre les compositions réactivables de l'invention, on peut, dans certains cas, rendre pratiquement linéaire l'évolution de la masse moléculaire (Mn) en fonction du taux de conversion des monomères.

Selon un mode de réalisation particulier du procédé de préparation des copolymères à bloc de deuxième génération de l'invention, la composition polymère réactivable mise en oeuvre peut avantageusement être telle qu'au moins 60%, de préférence au moins 75%, et avantageusement au moins 90% des chaînes polymères qu'elle contient, répond à la définition de la

Selon un mode de réalisation particulier du procédé de préparation des copolymères à bloc de deuxième génération de l'invention, la composition polymère réactivable mise en oeuvre peut avantageusement être telle qu'au moins 60%, de préférence au moins 75%, et avantageusement au moins 90% des chaînes polymères qu'elle contient, répond à la définition de la formule générale (P) définie précédemment. La mise en oeuvre de ce type particulier de composition réactivable selon l'invention permet en effet de préparer, par mise en contact de ladite composition polymère avec un ou plusieurs monomères éthyléniquement insaturés et une source de radicaux libres, des compositions polymères comprenant des copolymères de deuxième génération non symétriques, de type dibloc.

Quelle que soit la nature exacte de la composition polymère réactivable initialement mise en oeuvre, l'étape de formation du polymère de seconde génération peut ensuite être répétée avec de nouveaux monomères et le copolymère de seconde génération ainsi obtenu, de façon à former un copolymère à bloc de troisième génération. En particulier, la mise en contact d'une composition polymère comprenant un polymère de type dibloc avec un ou plusieurs monomères éthyléniquement insaturés et une source de radicaux libres mènera ainsi à la formation de copolymères de troisième génération de type tribloc.

On peut ainsi répéter autant de fois que nécessaire l'étape de polymérisation à partir d'un copolymère à blocs pour obtenir un copolymère avec un bloc supplémentaire.

De ce fait, de façon plus générale, la présente invention a pour objet un procédé de préparation d'un copolymère à blocs de Nième génération, où N étant un entier supérieur ou égal à 2, par un procédé de polymérisation radicalaire qui comprend :
(A) une première étape consistant à réaliser une composition polymère selon l'invention, au moyen d'un procédé tel que défini précédemment, c'est à dire au moyen d'un procédé comportant une étape de polymérisation radicalaire non photoinitiée mettant en oeuvre une composition comprenant :
   - au moins un monomère éthyléniquement insaturé répondant à la formule (I) précitée;
   - un composé disulfuré répondant à la formule (II) définie précédemment ; et
   - une source de radicaux libres, activable thermiquement, distincte du composé disulfuré de formule (II) ;
   puis
(B) un nombre (N-1) d'étapes successives de polymérisation radicalaire, chacune de ces étapes menant à l'obtention d'une composition polymère par mise en oeuvre d'un mélange comprenant :
   - une source de radicaux libres,
   - au moins un monomère éthyléniquement insaturé, et
   - le polymère obtenu à l'étape de l'étape de polymérisation précédente.

Les "monomères éthyléniquement insaturés" utilisables dans les procédés de préparation de polymères à blocs de la présente invention sont, de façon générale, tous les polymères possédant une double liaison C=C et susceptibles de pouvoir mener à une polymérisation radicalaire dans les conditions de mise en oeuvre dudit procédé.

A titre de monomères éthyléniquement insaturés utilisables dans les procédés de préparation de polymères à blocs de l'invention, on peut citer par exemple :
- le styrène et les dérivés du styrène comme l'alphaméthylstyrène ou le vinyltoluène ;
- les esters vinyliques d'acide carboxylique comme l'acétate de vinyle, le Versatate® de vinyle, le propionate de vinyle ;
- les halogénures de vinyle ;
- les acides mono- et di- carboxyliques insaturés éthyléniques comme l'acide acrylique, l'acide méthacrylique, l'acide itaconique, l'acide maléique, l'acide fumarique et les mono-alkylesters des acides dicarboxyliques du type cité avec les alcanols ayant de préférence 1 à 4 atomes de carbone et leurs dérivés N-substitués ;
- les amides des acides carboxyliques insaturés comme l'acrylamide, le méthacrylamide, le N-méthylolacrylamide ou méthacrylamide, les N-alkylacrylamides ;
- les monomères éthyléniques comportant un groupe acide sulfonique et ses sels alcalins ou d'ammonium par exemple l'acide vinylsulfonique, l'acide vinyl-benzène sulfonique, l'acide alpha-acrylamido méthylpropane-sulfonique, le 2-sulfoéthylène-méthacrylate ;
- les amides de la vinylamine, notamment le vinylformamide
ou le vinylacétamide ;
- les monomères éthyléniques insaturés comportant un groupe amino secondaire, tertiaire ou quaternaire, ou un groupe hétérocyclique contenant de l'azote tel que par exemple les vinylpyridines, le vinylimidazole, les (méth)acrylates d'aminoalkyle et les (méth)acrylamides d'aminoalkyle comme le diméthylaminoéthyl-acrylate
ou -méthacrylate, le ditertiobutylaminoéthyl-acrylate ou -méthacrylate, le diméthylamino méthyl-acrylamide ou -méthacrylamide, ou des monomères zwitterioniques comme par exemple l'acrylate de sulfopropyl (diméthyl)aminopropyle ;
- les diènes par exemple le butadiène, le chloroprène,
- les esters acryliques, et avantageusement les esters de l'acide acrylique avec des alcools en C₁-C₁₂, de préférence en C₁-C₈, éventuellement fluorés, et notamment l'acrylate de méthyle, l'acrylate d'éthyle, l'acrylate de propyle, l'acrylate de n-butyle, l'acrylate d'isobutyle, l'acrylate de 2-éthylhexyle, ou encore l'acrylate de t-butyle ;
- les nitriles vinyliques, et en particulier ceux ayant de 3 à 12 atomes de carbone, comme en particulier l'acrylonitrile et le méthacrylonitrile ; et
- l'acide vinylphosphoniques et ses dérivés.

Pour la préparation de bloc polyvinylamines, on utilise de préférence à titre de monomères éthyléniquement insaturés les amides de la vinylamine, par exemple le vinylformamide ou le vinylacétamide. Puis, le polymère obtenu est hydrolysé à pH acide ou basique.

Pour la préparation de bloc polyalcoolvinyliques, on utilise de préférence à titre de monomères éthyléniquement insaturés les esters vinyliques d'acide carboxylique, comme par exemple l'acétate de vinyle. Puis, le polymère obtenu est hydrolysé à pH acide ou basique.

Les types et quantités de monomères polymérisables mis en oeuvre selon la présente invention varient en fonction de l'application finale particulière à laquelle est destiné le polymère. Ces variations sont bien connues et peuvent être facilement déterminées par l'homme du métier,

Selon un mode de réalisation particulier, la ou les extrémité(s) réactive(s) des polymères à blocs obtenus selon le procédé de copolymérisation de l'invention peuvent être clivées pour former un polymère dont les extrémités sont des thiols ou des atome d'hydrogène. Ces modifications peuvent être mises en oeuvre par réduction et/ou hydrolyse.

Les différentes caractéristiques de l'invention apparaîtront encore plus nettement au vu des exemples illustratifs exposés ci-après.

### Exemple 1 : Synthèse d'une composition polymères réactivable à base de poly(méthacrylate de méthyle) (PMMA), en présence de bis-éthoxythiocarbonyl-disulfane EtO(C=S)S-S(C=S)OEt et d'amorceurs thermiques.

Dans un ballon de 100ml, on a introduit 50ml d'une solution benzénique contenant 23,63g (0,236mole) de méthacrylate de méthyle (MMA), 0.368g de bis-éthoxythiocarbonyl-disulfane (1,53 millimole), et un mélange de 0,243g (1,18 millimole) d'azobis(isobutyronitrile) (AIBN) et 0,245g (1 millimole) d'azobis(cyclohexane-1-carbonitrile) (V40) à titre d'amorceur thermique. Après dégazage de la solution et mise sous argon, le ballon a été placé à 80°C dans un bain thermostaté.

Au bout de quatre heures de réaction à 80°C. le milieu réactionnel a été ramené à température ambiante (25°C) et le polymère obtenu a été précipité dans l'heptane. Après séchage sous vide, on a obtenu 23 g d'un polymère, ce qui correspond à un rendement de 97,3% pour la polymérisation. Le polymère obtenu possède les caractéristiques suivantes (étalonnage PMMA) :
- Mn= 11200;
- Mw/Mn= 1,9

### Exemple 2: Synthèse d'un copolymère séquencé poly(méthacrylate de méthyle)-poly(acétate de vinyle) à partir de la composition polymère réactivable de l'exemple 1

Dans un ballon de 100ml, on a introduit 50ml d'une solution benzénique contenant 8g du polymère obtenu dans l'exemple 1, 14,6 mg d'AIBN, et 13,8g d'acétate de vinyle. Après dégazage et mise sous argon, le milieu réactionnel a été placé dans un bain thermostaté à 60°C.

Au bout de 72 heures le milieu réactionnel a été ramené à température ambiante (25°C) et a été additionné à de l'heptane. On a obtenu un précipité qu'on a filtré et séché sous vide. On a isolé ainsi 14,6g d'un copolymère, ce qui correspond à un taux de conversion de l'acétate de vinyle de 47,8%. Les caractéristiques de ce copolymère en étalonnage PMMA sont les suivantes :
- Mn= 21500,
- Mw/Mn= 1,6.

### Exemple 3 : Synthèse d'un copolymère séquencé poly(méthacrylate de méthyle)-poly(acrylate de 2-éthylhexyle) à partir de la composition polymère réactivable de l'exemple 1

Dans un ballon de 100ml, on a introduit 50ml d'une solution benzénique contenant 6,6g du polymère obtenu dans l'exemple 1, 14mg d'AIBN, et 12g d'acrylate de 2-éthylhexyle. Après dégazage et mise sous argon, le milieu réactionnel a été placé dans un bain thermostaté à 60°C.

Au bout de 8 heures le milieu réactionnel a été ramené à température ambiante (25°C) et a été additionné à de l'heptane froid. On a obtenu un précipité qu'on a filtré et séché sous vide. On a ainsi isolé 17g d'un copolymère, ce qui correspond à un taux de conversion de l'acrylate de 2-éthylhexyle de 86,6%. Les caractéristiques de ce copolymère en étalonnage PMMA sont les suivantes :
- Mn= 24200,
- Mw/Mn= 2,1.

### Exemple 4 : Synthèse d'une composition polymère réactivable à base de poly(méthacrylate de méthyle) (PMMA), en présence de bis-éthoxythiocarbonyl-disulfane EtO(C=S)S-S(C=S)OEt et d'un amorceur thermique.

Dans un ballon de 100 ml, on a introduit 50 ml d'une solution benzénique contenant 23,38 g (0,234 mole) de méthacrylate de méthyle (MMA), 0,374 g (1,54 millimole) de bis-éthoxythiocarbonyl-disulfane et 0,064 g (0,39 millimole) d'azobis(isobutyronitrile) (AIBN) à titre d'amorceur thermique. Après dégazage de la solution et mise sous argon, la ballon a été placé à 60 °C dans un bain thermostaté.

Au bout de 19 heures de réaction à 60 °C, le milieu réactionnel a été ramené à température ambiante (25 °C) et le polymère obtenu a été précipité dans le méthanol. Après séchage sous vide, on a obtenu 15,38 g d'un polymère, ce qui correspond à un rendement de 65,8 % pour la polymérisation. Le polymère obtenu possède les caractéristiques suivantes (étalonnage PMMA) :
- Mn = 26200
- Mw/Mn = 1,55

### Exemple 5 : Synthèse d'une composition polymère réactivable à base de poly(méthacrylate de méthyle) (PMMA), en présence de bis-éthoxythiocarbonyl-disulfane EtO(C=S)S-S(C=S)OEt et d'un amorceur thermique.

Dans un ballon de 100 ml, on a introduit 50 ml d'une solution benzénique contenant 23,48 g (0,2345 mole) de méthacrylate de méthyle (MMA), 0,372 g (1,54 millimole) de bis-éthoxythiocarbonyl-disulfane et 0,246 g (1,50 millimole) d'azobis(isobutyronitrile) (AIBN) à titre d'amorceur thermique. Après dégazage de la solution et mise sous argon, le ballon a été placé à 80 °C dans un bain thermostaté.

Au bout d'une heure et demie de réaction à 80 °C, le milieu réactionnel a été ramené à température ambiante (25 °C) et le polymère obtenu a été précipité dans le méthanol. Après séchage sous vide, on a obtenu 19,67 g d'un polymère, ce qui correspond à un rendement de 83,8 % pour la polymérisation. Le polymère obtenu possède les caractéristiques suivantes (étalonnage PMMA) :
- Mn = 16500
- Mw/Mn = 1,56

### Exemple 6 : Synthèse d'une composition polymère réactivable à base de poly(méthacrylate de méthyle) (PMMA), en présence de bis-éthoxythiocarbonyl-disulfane EtO(C=S)S-S(C=S)OEt et d'un amorceur thermique.

Dans un ballon de 100 ml, on a introduit 50 ml d'une solution benzénique contenant 23,41 g (0,2338 mole) de méthacrylate de méthyle (MMA), 0,380 g (1,57 millimole) de bis-éthoxythiocarbonyl-disulfane et 0,241 g (1,47 millimole) d'azobis(isobutyronitrile) (AIBN) à titre d'amorceur thermique. Après dégazage de la solution et mise sous argon, la ballon a été placé à 80 °C dans un bain thermostaté.

Au bout d'une heure et demie de réaction à 80 °C, le milieu réactionnel a été ramené à température ambiante (25 °C) et le polymère obtenu a été précipité dans le méthanol. Après séchage sous vide, on a obtenu 20,32 g d'un polymère, ce qui correspond à un rendement de 86,8 % pour la polymérisation. Le polymère obtenu possède les caractéristiques suivantes (étalonnage PMMA) :
- Mn = 16340
- Mw/Mn = 1,59

### Exemple 7 : Synthèse d'un copolymère séquencé poly(méthacrylate de méthyle)-polystyrène à partir de la composition Polymère réactivable de l'exemple 4.

Dans un ballon de 100 ml, on a introduit 50 ml d'une solution benzénique contenant 7,96 g du polymère obtenu dans l'exemple 4, 0,026 g (0,156 millimole) d'AIBN, et 21,08 g (0,2024 mole) de styrène. Après dégazage et mise sous argon, le milieu réactionnel a été placé dans un bain thermostaté à 60 °C.

Au bout de 48 heures de réaction le milieu réactionnel a été ramené à température ambiante (25°C) et à été additionné au méthanol. On a obtenu un précipité qu'on a filtré et séché sous vide. On a isolé ainsi 19,87 g d'un copolymère, ce qui correspond à un taux de conversion de styrène de 56,5 %.
Les caractéristiques de ce copolymère en étalonnage PMMA sont les suivantes :
- Mn = 52400
- Mw/Mn = 1,7

### Exemple 8 : Synthèse d'un copolymère séquencé poly(méthacrylate de méthyle)-poly(acétate de vinyle) à partir de la composition polymère réactivable de l'exemple 4.

Dans un ballon de 100 ml, on a introduit 50 ml d'une solution benzénique contenant 15,5 g du polymère obtenu dans l'exemple 4, 0,0323g (0,197 millimole) d'AIBN, et 23,17 g (0,269 mole) d'acétate de vinyle. Après dégazage et mise sous argon, le milieu réactionnel a été placé dans un bain thermostaté à 60°C.

Au bout de 44 heures de réaction le milieu réactionnel a été ramené à température ambiante (25 °C) et à été additionné au méthanol. On a obtenu un précipité qu'on a filtré et séché sous vide. On a isolé ainsi 37,14 g d'un copolymère, ce qui correspond à un taux de conversion de styrène de 93,4 %.
Les caractéristiques de ce copolymère en étalonnage PMMA sont les suivantes :
- Mn = 63200
- Mw/Mn = 1,7

### Exemple 9 : Synthèse d'un copolymère séquencé poly(méthacrylate de méthyle)-polystyrène à partir de la composition polymère réactivable de l'exemple 5.

Dans un ballon de 100 ml, on a introduit 50 ml d'une solution benzénique contenant 4,57 g du polymère obtenu dans l'exemple 5, 0,024g (0,146 millimole) d'AIBN, et 19,73 g (0,189 mole) de styrène. Après dégazage et mise sous argon, le milieu réactionnel a été placé dans un bain thermostaté à 60°C.

Au bout de 48 heures de réaction le milieu réactionnel a été ramené à température ambiante (25 °C) et à été additionné au méthanol. On a obtenu un précipité qu'on a filtré et séché sous vide. On a isolé ainsi 12,98 g d'un copolymère, ce qui correspond à un taux de conversion de styrène de 42,6 %.
Les caractéristiques de ce copolymère en étalonnage PMMA sont les suivantes :
- Mn = 42760
- Mw/Mn = 1,8

### Exemple 10 : Synthèse d'un copolymère séquencé poly(méthacrylate de méthyle)-poly(acétate de vinyle) à partir de la composition polymère réactivable de l'exemple 6.

Dans un ballon de 100 ml, on a introduit 50 ml d'une solution benzénique contenant 9,79 g du polymère obtenu dans l'exemple 6, 0,0323 g ( 0.197 millimole) d'AIBN, et 23,25 g (0,27 mole) d'acétate de vinyle. Après dégazage et mise sous argon, le milieu réactionnel a été placé dans un bain thermostaté à 60°C.

Au bout de 24 heures de réaction le milieu réactionnel a été ramené à température ambiante (25 °C) et a été additionné au méthanol. On a obtenu un précipité qu'on a filtré et séché sous vide. On a isolé ainsi 30,71 g d'un copolymère, ce qui correspond à un taux de conversion de styrène de 90 %. Les caractéristiques de ce copolymère en étalonnage PMMA sont les suivantes :
- Mn = 44760
- Mw/Mn = 1,8

## Revendications

1. Procédé de préparation d'un copolymère à blocs de deuxième génération comprenant une étape consistant à réaliser la polymérisation radicalaire d'un mélange comprenant :
- une source de radicaux libres,
- au moins un monomère éthyléniquement insaturé, et
- une composition polymère susceptible d'être obtenue selon un procédé comprenant une étape de polymérisation radicalaire non photoinitiée mettant en couve une composition comprenant :
(a) au moins un monomère éthyléniquement insaturé ;
(b) au moins un composé répondant à la formule (II) ci-dessous :
Z¹-C(=S)-S-S-C(=S)-Z²
(c) et au moins une source de radicaux libres activable thermiquement, distincte du composé de formule (II),
où, dans la formule (II), Z¹ et Z² sont identiques ou différents, et représentent chacun un radical choisi parmi :
(i) un groupement alkyle, halogénoalkyle, perfluoroalkyle, alcényle, alcynyle, acyle, aryle, arylalkyle, arylalcényle, arylalcynyle, ou bien un cycle carboné ou un hétérocycle, ou bien encore une chaîne polymère;
(ii) un radical -OR³, dans lequel R³ désigne un groupement choisi parmi :
- un groupement alkyle, halogénoalkyle, perfluoroalkyle, alcényle, alcynyle, acyle, aryle, arylalkyle, arylalcényle, arylalcynyle, ou bien un cycle carboné ou un hétérocycle, ou bien une chaîne polymère;
- un groupement -CR^{A}R^{B}PO(OR^{C})(OR^{D}), dans lequel :
- R^{A} et R^{B} représentent chacun, indépendamment l'un de l'autre, un atome d'hydrogène, un atome d'halogène, un groupement perfluoroalkyle, un cycle carboné ou un hétérocycle, ou bien encore un groupement -NO₂, -NCO, - CN, ou un groupement choisi parmi les groupements de type -R^{E}, -SO₃R^{E},
- OR^{E}, -SR^{E}, -NR^{E}R^{F}, -OOCR^{E}, -CONR^{E}R^{F}, ou -SO₃R^{E},
dans lesquels les groupements représentés par R^{E} et R^{F} désignent chacun, de façon indépendante, un groupement alkyle, alcényle, alcynyle, aryle, aryle, arylalkyle, arylalcényle, ou arylalcynyle ;
ou bien R^{A} et R^{B} forment ensemble un groupement =O
ou =S ;
ou bien R^{A} et R^{B} forment ensemble, avec l'atome de carbone auquel ils sont rattachés, un cycle hydrocarboné
ou un hétérocycle ; et
- R^{C} et R^{D} représentent chacun, indépendamment l'un de l'autre, un radical répondant à l'une des définition donnée ci-dessus pour le groupement R^{E} ;
ou bien R^{C} et R^{D} forment ensemble une chaîne hydrocarbonée comportant de 2 à 4 atome de carbone, éventuellement interrompue par un groupement -O-, -S-, ou
- NR^{G}-, où R^{G} répond à l'une des définition donnée ci-dessus pour le groupement R^{E} ;
ou
(iii) un groupement -NR⁴R⁵, où :
- R⁴ et R⁵ représentent indépendamment l'un de l'autre un radical choisi parmi un groupement alkyle, halogénoalkyle, alcényle, alcynyle, acyle, ester, aryle, arylalkyle, arylalcényle, arylalcynyle, ou un cycle carboné ; ou
- R⁴ et R⁵ forment ensemble une chaîne hydrocarbonée comportant de 2 à 4 atome de carbone, éventuellement interrompue par un groupement -O-, -S-, ou -NR^{H}-, où R^{H} répond à l'une des définitions données ci-dessus pour le groupement R^{E}.

2. Procédé selon la revendication 1, **caractérisé en ce que** les deux groupements Z¹ et Z² présents dans le composé de formule (II) sont identiques.

3. Procédé selon la revendication 1 ou la revendication 2, **caractérisé en ce que** chacun des groupements Z¹ et Z² présents dans le composé de formule (II) est un groupement de type -OR³, dans lequel R³ est un radical tel que défini dans la revendication 1.

4. Procédé selon la revendication 3, **caractérisé en ce que** le composé de formule (II) est un disulfure de xanthate répondant à la formule (IIa) suivante :
Z^{a}O-C(=S)-S-S-C(=S)-OZ^{b}
dans laquelle les groupes Z^{a} et Z^{b}, identiques ou différents, désignent chacun un radical choisi parmi les radicaux alkyle, halogénoalkyle, aryle,
ou arylalkyle.

5. Procédé selon la revendication 4, **caractérisé en ce que** chacun des groupements Z^{a} et Z^{b} présents dans le composé de formule (IIa) désigne un radical alkyle comprenant de 2 à 4 atomes de carbone, un radical 2,2,2-trifluoroéthyle, ou un radical phényle.

6. Procédé selon la revendication 1 ou la revendication 2, **caractérisé en ce que** chacun des groupements Z¹ et Z² présents dans le composé de formule (II) est choisi parmi un groupement alkyle, un groupement halogénoalkyle, un groupement alcényle, ou un groupement alcynyle.

7. Procédé selon la revendication 1 ou la revendication 2, **caractérisé en ce que** chacun des groupements Z¹ et Z² présents dans le composé de formule (II) est un groupement -NR⁴R⁵, où les radicaux R⁴ et R⁵ sont tels que définis dans la revendication 1.

8. Procédé selon la revendication 7, **caractérisé en ce que** chacun des groupements R⁴ et R⁵ désigne un groupement alkyle, halogénoalkyle, aryle, arylalkyle, acyle ou ester, ou bien les radicaux R⁴ et R⁵ forment un hétérocycle, substitué ou non substitué, avec l'azote auquel ils sont rattachés.

9. Procédé selon l'une quelconque des revendications 1 à 8, **caractérisé en ce que** le monomère éthyléniquement insaturé (a) mis en oeuvre répond à la formule (I) ci-dessous :
H₂C=CR¹R²
dans laquelle :
- R¹ représente un radical -COOA, dans lequel A désigne un groupement alkyle, halogénoalkyle, perfluoroalkyle, alcényle, alcynyle, arylalkyle, arylalcényle, ou arylalcynyle : et
- R² représente un atome d'hydrogène, un atome d'halogène, un groupement alkyle, un groupement halogénoalkyle, ou un groupement alcoxy, ces groupements alkyle, halogénoalkyle ou alcoxy pouvant être substitués ou non.

10. Procédé selon la revendication 9, **caractérisé en ce que** dans la composition soumise à la réaction de polymérisation, le ratio molaire de la quantité de composé (II) rapportée à la quantité de monomère (I) est compris entre 1 : 5 et 1 : 10 000.

11. Procédé selon la revendication 9 ou selon la revendication 10, **caractérisé en ce que**, le monomère (I) mis en oeuvre est un monomère méthacrylique répondant à la formule (la) ci dessous :
H₂C=CR¹(CH₃)
dans laquelle le radical R¹ est tel que défini dans la revendication 9.

12. Procédé selon la revendication 11, **caractérisé en ce que** le composé de formule (II) mis en oeuvre selon la présente invention est un disulfure de xanthate répondant à la formule (IIa) suivante :
Z^{a}O-C(=S)-S-S-C(=S)-OZ^{b}
dans laquelle les groupes Z^{a} et Z^{b}, identiques ou différents, désignent chacun un radical répondant à l'une des définitions données pour R³ dans la revendication 1.

13. Procédé de copolymérisation selon l'une quelconque des revendications 1 à 12, **caractérisé en ce que** ladite composition polymère mise en oeuvre telle que définie dans la revendication 1 est telle qu'au moins 60% des chaînes présentes répond à la formule (P2) suivante :
Z'O-(C=S)-S-[-CR¹R²-CH₂-]ₙ-Y
dans laquelle Z' a l'une des significations données pour Z^{a} et Z^{b} dans la formule générale (IIa) de la revendication 4, et dans laquelle :
- les groupements R¹ et R² peuvent avoir des significations différentes au sein de chaque unité [-CR¹R²-CH₂-] de la formule (P2) et représentent, au sein de chaque unité [-CR¹R²-CH₂-], deux groupements identiques ou différents répondant chacun à l'une des définitions données pour les groupements R¹ et R² dans la revendication 9 ;
- n désigne un entier au moins égal à 1 ; et
- Y désigne un radical caractéristique de l'amorçage thermique réalisé lors de la polymérisation du procédé de la revendication 1.

14. Composition de copolymère susceptible d'être obtenue par un procédé selon l'une quelconque des revendications 1 à 13.

15. Procédé de préparation d'un copolymère à blocs de Nième génération, N étant un entier supérieur à 2, par un procédé de polymérisation radicalaire qui comprend :
(A) une première étape consistant à réaliser un copolymère de deuxième génération selon la revendication 1, et
(B) un nombre (NN-1) d'étapes de polymérisations radicalaires, chacune de ces étapes mettant en oeuvre un mélange comprenant :
- une source de radicaux libres,
- au moins un monomère éthyléniquement insaturé et
- le polymère obtenu à l'étape de polymérisation précédente.

## Claims

1. Process for preparing a second-generation block copolymer comprising a step consisting of carrying out radical polymerisation of a mixture comprising:
- a source of free radicals,
- at least one ethylenically unsaturated monomer, and
- a polymer composition which may be obtained by a process comprising a non-photoinitiated radical polymerisation step using a composition comprising:
(a) at least one ethylenically unsaturated monomer;
(b) at least one compound corresponding to the following formula (II):
Z¹-C(=S)-S-S-C(=S)-Z²
(c) and at least one heat-activated source of free radicals, distinct from the compound of formula (II),
wherein, in formula (II), Z¹ and Z² are identical or different, and each represent a radical selected from among :
(i) an alkyl, haloalkyl, perfluoroalkyl, alkenyl, alkynyl, acyl, aryl, arylalkyl, arylalkenyl or arylalkynyl group, or a carbon ring or a heterocycle, or a polymer chain;
(ii) an -OR³ radical wherein R³ denotes a group selected from among:
- an alkyl, haloalkyl, perfluoroalkyl, alkenyl, alkynyl, acyl, aryl, arylalkyl, arylalkenyl or arylalkynyl group, or a carbon ring or heterocycle, or a polymer chain;
- a group -CR^{A}R^{B}PO(OR^{C})(OR^{D}), wherein:
- R^{A} and R^{B} each independently of one another represent a hydrogen atom, a halogen atom, a perfluoroalkyl group, a carbon ring or a heterocycle, or an -NO₂, -NCO or -CN group or a group selected from among the groups of the type -R^{E},
- SO₃R^{E}, -OR^{E}, -SR^{E}, -NR^{E}R^{F}, -OOCR^{E}, -CONR^{E}R^{F} or
- SO₃R^{E}, wherein the groups represented by R^{E} and R^{F} each independently denote an alkyl, alkenyl, alkynyl, aryl, aryl, arylalkyl, arylalkenyl or arylalkynyl group;
or R^{A} and R^{B} together form an =O or =S group;
or R^{A} and R^{B} together with the carbon atom to which they are attached form a hydrocarbon ring or a heterocycle;
and
- R^{C} and R^{D} each independently of one another represent a radical corresponding to one of the definitions given hereinbefore for the group R^{E};
or R^{C} and R^{D} together form a hydrocarbon chain comprising 2 to 4 carbon atoms, optionally interrupted by an -O-, -S- or
- NR^{G}- group where R^{G} corresponds to one of the definitions given hereinbefore for the group R^{E};
or
(iii) a group -NR⁴R⁵, wherein:
- R⁴ and R⁵ independently of one another represent a radical selected from among an alkyl, haloalkyl, alkenyl, alkynyl, acyl, ester, aryl, arylalkyl, arylalkenyl or arylalkynyl group, or a carbon ring; or
- R⁴ and R⁵ together form a hydrocarbon chain comprising 2 to 4 carbon atoms, optionally interrupted by an -O-, -S- or -NR^{H}-group where R^{H} corresponds to one of the definitions given hereinbefore for the group R^{E}.

2. Process according to claim 1, **characterised in that** the two groups Z¹ and Z² present in the compound of formula (II) are identical.

3. Process according to claim 1 or claim 2, **characterised in that** each of the groups Z¹ and Z² present in the compound of formula (II) is a group of the type -OR³,
wherein R³ is a radical as defined in claim 1.

4. Process according to claim 3, **characterised in that** the compound of formula (II) is a xanthate disulphide corresponding to the following formula (IIa):
Z^{a}O-C(=S)-S-S-C(=S)-OZ^{b}
wherein the groups Z^{a} and Z^{b}, which may be identical or different, each denote a radical selected from among the alkyl, haloalkyl, aryl or arylalkyl radicals.

5. Process according to claim 4, **characterised in that** each of the groups Z^{a} and Z^{b} present in the compound of formula (IIa) denotes an alkyl radical comprising 2 to 4 carbon atoms, a 2,2,2-trifluoroethyl radical or a phenyl radical.

6. Process according to claim 1 or claim 2, **characterised in that** each of the groups Z¹ and Z² present in the compound of formula (II) is selected from among an alkyl group, a haloalkyl group, an alkenyl group or an alkynyl group.

7. Process according to claim 1 or claim 2, **characterised in that** each of the groups Z¹ and Z² present in the compound of formula (II) is an -NR⁴R⁵ group,
wherein the radicals R⁴ and R⁵ are as defined in claim 1.

8. Process according to claim 7, **characterised in that** each of the groups R⁴ and R⁵ denotes an alkyl, haloalkyl, aryl, arylalkyl, acyl or ester group, or the radicals R⁴ and R⁵ form a substituted or unsubstituted heterocycle with the nitrogen to which they are attached.

9. Process according to any one of claims 1 to 8, **characterised in that** the ethylenically unsaturated monomer (a) used corresponds to the following formula (I):
H₂C=CR¹R²
wherein:
- R¹ denotes a radical -COOA, wherein A denotes an alkyl, haloalkyl, perfluoroalkyl, alkenyl, alkynyl, arylalkyl, arylalkenyl or arylalkynyl group;
and
- R² denotes a hydrogen atom, a halogen atom, an alkyl group, a haloalkyl group or an alkoxy group, while these alkyl, haloalkyl or alkoxy groups may be substituted or unsubstituted.

10. Process according to claim 9, **characterised in that**, in the composition subjected to the polymerisation reaction, the molar ratio of the quantity of compound (II) in relation to the quantity of monomer (I) is between 1 : 5 and 1 : 10,000.

11. Process according to claim 9 or claim 10, **characterised in that** the monomer
(I) used is a methacrylic monomer corresponding to the following formula (Ia):
H₂C=CR¹(CH₃)
wherein the radical R¹ is as defined in claim 9.

12. Process according to claim 11, **characterised in that** the compound of formula (II) used according to the present invention is a xanthate disulphide corresponding to the following formula (IIa):
Z^{a}O-C(=S)-S-S-C(=S)-OZ^{b}
wherein the groups Z^{a} and Z^{b}, which may be identical or different, each denote a radical corresponding to one of the definitions given for R³ in claim 1.

13. Process of copolymerisation according to any one of claims 1 to 12, **characterised in that** said polymer composition used as defined in claim 1 is such that at least 60% of the chains present correspond to the following formula (P2):
Z'O-(C=S)-S-[-CR¹R²-CH₂-]ₙ-Y
wherein Z' has one of the meanings given for Z^{a} and Z^{b} in general formula (IIa) in claim 4, and wherein:
- the groups R¹ and R² may have different meanings within each unit
- [-CR¹R²-CH₂-] in formula (P2) and represent, within each unit -[-CR¹R²-CH₂-], two identical or different groups each corresponding to one of the definitions given for the groups R¹ and R² in claim 9;
- n denotes an integer equal to at least 1; and
- Y denotes a radical characteristic of the thermal initiation carried out during the polymerisation in the process according to claim 1.

14. Copolymer composition which may be obtained by a process according to any one of claims 1 to 13.

15. Process for preparing an N^{th} generation block copolymer, N being an integer greater than 2, by a radical polymerisation process which comprises:
(A) a first step consisting of producing a second generation copolymer according to claim 1, and
(B) a number (N-1) of radical polymerisation steps, each of these steps using a mixture comprising:
- a source of free radicals,
- at least one ethylenically unsaturated monomer, and
- the polymer obtained in the previous polymerisation step.

## Patentansprüche

1. Verfahren zur Herstellung eines Blockcopolymeren der zweiten Generation, das einen Schritt umfasst, der aus dem Ausführen einer radikalischen Polymerisation eines Gemischs besteht, umfassend:
- eine Quelle freier Radikale,
- wenigstens ein ethylenisch ungesättigtes Monomer und
- eine Polymerzusammensetzung, die gemäß einem Verfahren erhalten werden kann, das einen Schritt einer nicht photoinitiierten, radikalischen Polymerisation unter Einsetzen einer das Folgende umfassenden Zusammensetzung umfasst:
(a) wenigstens ein ethylenisch ungesättigtes Monomer,
(b) wenigstens eine der nachstehenden Formel (II) entsprechende Verbindung:
Z¹-C(=S)-S-S-C(=S)-Z²
(c) und wenigstens eine von der Verbindung der Formel (II) verschiedene Quelle thermisch aktivierbarer, freier Radikale,
wobei in Formel (II) Z¹ und Z² gleich oder verschieden sind und jeweils einen aus dem Folgenden ausgewählten Rest darstellen:
(i) einer Alkyl-, Halogenalkyl-, Perfluoralkyl-, Alkenyl-, Alkinyl-, Acyl-, Aryl-, Arylalkyl-, Arylalkenyl- oder Arylalkinylgruppe oder einem Carbocyclus oder einem Heterocyclus oder auch einer Polymerkette,
(ii) einem Rest -OR³, worin R³ eine aus dem Folgenden ausgewählte Gruppe bedeutet:
- einer Alkyl-, Halogenalkyl-, Perfluoralkyl-, Alkenyl-, Alkinyl-, Acyl-, Aryl-, Arylalkyl-, Arylalkenyl- oder Arylalkinylgruppe oder einem Carbocyclus oder einem Heterocyclus oder auch einer Polymerkette,
- einer Gruppe -CR^{A}R^{B}PO(OR^{C})(OR^{D}), worin:
- R^{A} und R^{B} jeweils unabhängig voneinander ein Wasserstoffatom, ein Halogenatom, eine Perfluoralkylgruppe, einen Carbocyclus oder einen Heterocyclus oder auch eine Gruppe -NO₂, -NCO oder -CN oder eine Gruppe darstellen, die aus den Gruppen des Typs -R_{E}, -SO₃R^{E}, -OR^{E},
- SR^{E}, -NR^{E}R^{F}, -OOCR^{E}, -CONR^{E}R^{F} oder -SO₃R^{E} ausgewählt ist, worin die durch R^{E} und R^{F} dargestellten Gruppen jeweils unabhängig eine Alkyl-, Alkenyl-, Alkinyl-, Aryl-, Aryl-, Arylalkyl-, Arylalkenyl- oder Arylalkinylgruppe bedeuten,
oder R^{A} und R^{B} zusammen eine Gruppe =O oder =S bilden,
oder R^{A} und R^{B} zusammen mit dem Kohlenstoffatom, an das sie gebunden sind, einen Kohlenwasserstoffcyclus oder einen Heterocyclus bilden,
und
- R^{C} und R^{D} jeweils unabhängig voneinander einen Rest darstellen, der einer der vorstehend für die Gruppe R^{E} angegebenen Definitionen entspricht,
oder R^{C} und R^{D} zusammen eine 2 bis 4 Kohlenstoffatome umfassende Kohlenwasserstoffkette bilden, die gegebenenfalls durch eine Gruppe
- O-, -S- oder -NR^{G}-, worin R^{G} einer der vorstehend für die Gruppe R^{E} angegebenen Definitionen entspricht, unterbrochen ist,
oder
(iii) einer Gruppe -NR⁴R⁵, worin
- R⁴ und R⁵ unabhängig voneinander einen Rest darstellen, der aus einer Alkyl-, Halogenalkyl-, Alkenyl-, Alkinyl-, Acyl-, Ester-, Aryl-, Arylalkyl-, Arylalkenyl- oder Arylalkinylgruppe oder einem Carbocyclus ausgewählt ist, oder
- R⁴ und R⁵ zusammen eine 2 bis 4 Kohlenstoffatome umfassende Kohlenwasserstoffkette bilden, die gegebenenfalls durch eine Gruppe -O-, -S- oder
- NR^{H}-, worin R^{H} einer der vorstehend für die Gruppe R^{E} angegebenen Definitionen entspricht, unterbrochen ist.

2. Verfahren gemäß Anspruch 1, **dadurch gekennzeichnet, dass** die beiden bei der Verbindung der Formel (II) vorhandenen Gruppen Z¹ und Z² gleich sind.

3. Verfahren gemäß Anspruch 1 oder Anspruch 2, **dadurch gekennzeichnet, dass** die bei der Verbindung der Formel (II) vorhandenen Gruppen Z¹ und Z² jeweils eine Gruppe des Typs -OR³ sind, worin R³ ein wie in Anspruch 1 definierter Rest ist.

4. Verfahren gemäß Anspruch 3, **dadurch gekennzeichnet, dass** die Verbindung der Formel (II) ein der folgenden Formel (IIa) entsprechendes Xanthogenatdisulfid ist:
Z^{a}O-C(=S)-S-S-C(=S)-OZ^{b}
worin die Gruppen Z^{a} und Z^{b}, die gleich oder verschieden sind, jeweils einen Rest bedeuten, der aus Alkyl-, Halogenalkyl-, Aryl- oder Arylalkylresten ausgewählt ist.

5. Verfahren gemäß Anspruch 4, **dadurch gekennzeichnet, dass** die bei der Verbindung der Formel (IIa) vorhandenen Gruppen Z^{a} und Z^{b} jeweils einen 2 bis 4 Kohlenstoffatome umfassenden Alkylrest, einen 2,2,2-Trifluorethylrest oder einen Phenylrest bedeuten.

6. Verfahren gemäß Anspruch 1 oder Anspruch 2, **dadurch gekennzeichnet, dass** die bei der Verbindung der Formel (II) vorhandenen Gruppen Z¹ und Z² jeweils aus einer Alkylgruppe, einer Halogenalkylgruppe, einer Alkenylgruppe oder einer Alkinylgruppe ausgewählt sind.

7. Verfahren gemäß Anspruch 1 oder Anspruch 2, **dadurch gekennzeichnet, dass** die bei der Verbindung der Formel (II) vorhandenen Gruppen Z¹ und Z² jeweils eine Gruppe -NR⁴R⁵ sind, worin die Reste R⁴ und R⁵ wie in Anspruch 1 definiert sind.

8. Verfahren gemäß Anspruch 7, **dadurch gekennzeichnet, dass** die Gruppen R⁴ und R⁵ jeweils eine Alkyl-, Halogenalkyl-, Aryl-, Arylalkyl-, Acyl- oder Estergruppe bedeuten oder die Reste R⁴ und R⁵ mit dem Stickstoff, an den sie gebunden sind, einen substituierten oder unsubstituierten Heterocyclus bilden.

9. Verfahren gemäß einem der Ansprüche 1 bis 8, **dadurch gekennzeichnet, dass** das eingesetzte ethylenisch ungesättigte Monomer (a) der nachstehenden Formel (I) entspricht:
H₂C=CR¹R²
worin
- R¹ einen Rest -COOA darstellt, worin A eine Alkyl-, Halogenalkyl-, Perfluoralkyl-, Alkenyl-, Alkinyl-, Arylalkyl-, Arylalkenyl- oder Arylalkinylgruppe bedeutet und
- R² ein Wasserstoffatom, ein Halogenatom, eine Alkylgruppe, eine Halogenalkylgruppe oder eine Alkoxygruppe darstellt, wobei die Alkyl-, Halogenalkyl- oder Alkoxygruppen substituiert oder unsubstituiert sein können.

10. Verfahren gemäß Anspruch 9, **dadurch gekennzeichnet, dass** bei der der Polymerisationsreaktion unterzogenen Zusammensetzung das Molverhältnis der Menge der Verbindung (II) bezogen auf die Menge des Monomers (I) von 1:5 bis 1:10000 beträgt.

11. Verfahren gemäß Anspruch 9 oder Anspruch 10, **dadurch gekennzeichnet, dass** das eingesetzte Monomer (I) ein der nachstehenden Formel (la) entsprechendes Methacrylmonomer ist
H₂C=CR¹(CH₃)
worin der Rest R¹ wie in Anspruch 9 definiert ist.

12. Verfahren gemäß Anspruch 11, **dadurch gekennzeichnet, dass** die gemäß der vorliegenden Erfindung eingesetzte Verbindung der Formel (II) ein der folgenden Formel (IIa) entsprechendes Xanthogenatdisulfid ist
Z^{a}O-C(=S)-S-S-C(=S)-OZ^{b}
worin die Gruppen Z^{a} und Z^{b}, die gleich oder verschieden sind, jeweils einen Rest bedeuten, der einer der in Anspruch 1 für R³ angegebenen Definitionen entspricht.

13. Verfahren zur Copolymerisation gemäß einem der Ansprüche 1 bis 12, **dadurch gekennzeichnet, dass** die eingesetzte, wie in Anspruch 1 definierte Polymerzusammensetzung derart beschaffen ist, dass mindestens 60 % der vorhandenen Ketten der folgenden Formel (P2) entsprechen:
Z'O-(C=S)-S-[-CR¹R²-CH₂-]ₙ-Y
worin Z' eine der für Z^{a} und Z^{b} in der allgemeinen Formel (IIa) des Anspruchs 4 angegebenen Definitionen entspricht und worin
- die Gruppen R¹ und R² in jeder Einheit [-CR¹R²-CH₂-] der Formel (P2) verschiedene Bedeutungen aufweisen können und in jeder Einheit [-CR¹R²-CH₂-] zwei gleiche oder verschiedene Gruppen darstellen, die jeweils einer der in Anspruch 9 für die Gruppen R¹ und R² angegebenen Definitionen entsprechen,
- n eine ganze Zahl von mindestens 1 bedeutet und
- Y einen Rest mit der Funktion zu der bei der Polymerisation des Verfahrens des Anspruchs 1 ausgeführten thermischen Initiierung bedeutet.

14. Copolymerzusammensetzung, die durch ein Verfahren gemäß einem der Ansprüche 1 bis 13 erhalten werden kann.

15. Verfahren zur Herstellung eines Blockcopolymers der N-ten Generation, wobei N eine ganze Zahl größer 2 ist, durch ein Verfahren der radikalischen Polymerisation, das
(A) einen ersten Schritt, der aus dem Herstellen eines Copolymers der zweiten Generation gemäß Anspruch 1 besteht, und
(B) eine Anzahl (N-1) von Schritten radikalischer Polymerisationen umfasst, wobei bei jedem dieser Schritte ein Gemisch eingesetzt wird, das Folgendes umfasst:
- eine Quelle freier Radikale,
- wenigstens ein ethylenisch ungesättigtes Monomer und
- das bei dem vorangehenden Polymerisationsschritt erhaltene Polymer.
